# EUROPEAN PATENT APPLICATION

(11) **EP 3 184 560 A1**
(43) Date of publication of application: **28.06.2017**
(21) Application number: 15202052.5
(22) Date of filing: 22.12.2015
(51) Int. Cl.: C08F 220/22, C08F 220/24, C08F 230/08

(54) **PHOTO-CURABLE COPOLYMER, PHOTO-CURABLE RESIN COMPOSITION COMPRISING THE SAME, AND ANTI-FINGERPRINT FILM MADE THEREFROM**

(71) Applicant: Solvay SA, 1120 Bruxelles (BE)
(72) Inventor: KIM, Mo-Joon, 689-892 ULSAN (KR); KIM, Byeong-Ki, SEOUL (KR); CHOI, Beom-Jin, SEOUL (KR)
(74) Representative: Mross, Stefan P.M.

(57) **Abstract**

Disclosed in the present invention are photo-curable copolymers, and photo-curable resin compositions comprising the same, which can be suitably used for manufacturing anti-fingerprint film.

## Description

### FIELD OF THE INVENTION

The present invention relates to a photo-curable copolymer, photo-curable resin composition, and a layer made from the photo-curable resin composition suitable for use in functional film applications, in particular in anti-fingerprint film for electronic devices, including display device, such as liquid crystal display (LCD) device and organic light-emitting diode (OLED) device.

### BACKGROUND OF THE INVENTION

Functional films are developed for various applications, including electronics applications, such as display devices (e.g. liquid crystal display (LCD)). Among others, a development of optically clear hard coating having a high hardness is desired. Such optically clear coating having a high hardness (often referred to as "hard coating") is applied in various fields, including coatings for plastics and for display devices to be able to replace conventional plastic protection film. Photo-curable (meth)acrylate coatings are often used as surface-protection coating material for various plastic products. For the materials for the hard coating, it is often required to have sufficient hardness and good adhesion to plastic film, and not to exhibit film curl and rainbow phenomena.

Anti-fingerprint coating is another type of functional films, and development thereof is desired in the art. Polymers containing fluorine or siloxane group or their compositions are often used for fabricating the anti-fingerprint coating on glass substrate. Recent development of flexible electronic products requires the use of flexible substrate instead of conventional rigid substrate, such as glass substrate, and therefore, development of materials which can exhibit both anti-fingerprint property and flexibility is required in the art.

### DESCRIPTION OF THE INVENTION

A purpose of the present invention is to provide a material which can function as both anti-fingerprint coating and hard coating (often referred to as "anti-fingerprint hard coating"). Another purpose of the invention is to provide a material which exhibits sufficient flexibility when fabricated into the film. Further purpose of the present invention is to provide a material which shows excellent anti-fingerprint property. Yet further purpose of the invention is to provide a material which exhibits good hardness.

The present invention therefore relates to photo-curable copolymers comprising a first (meth)acrylic recurring unit (A) comprising at least one fluorine atom, silane group, or siloxane group, and a second vinylic recurring unit (B) comprising at least one photo-curable group.

Further, the present invention provides photo-curable resin compositions comprising the photo-curable copolymer to the present invention, and layers, especially hard coating layers, suitable for the use in anti-fingerprint application.

It has been surprisingly found that one or more properties required in the anti-fingerprint hard coating application as explained above can be attained by using the photo-curable copolymer according to the present invention. Especially, it has been found that the photo-curable copolymer according to the invention can be advantageously used for forming a layer which exhibits excellent anti-fingerprint property and hardness as well as sufficient flexibility to be used in a flexible substrate.

### DETAILED DESCRIPTION OF THE INVENTION

In the present invention, "alkyl group" is understood to denote in particular a straight chain, branched chain, or cyclic hydrocarbon group usually having from 1 to 20 carbon atoms. Examples of alkyl group include methyl, ethyl, propyl, isopropyl, butyl, isobutyl, *sec*-butyl, *tert*-butyl, pentyl, neopentyl, hexyl, cyclopropyl, cyclobutyl, cyclopentyl, and cyclohexyl. The alkyl group having 1 to 3 carbon atoms is particularly preferred in the present invention.

In the present invention, "aryl group" is understood to denote in particular any functional group or substituent derived from an aromatic ring. In particular, the aryl groups can have 5 to 20 carbon atoms preferably 6 to 12 carbon atoms, in which some or all of the hydrogen atoms of the aryl group may or may not be substituted with other groups. The aryl groups are preferably optionally substituted phenyl groups, naphthyl groups, anthryl group and phenanthryl group.

In the present invention, "amine group" is understood to denote in particular aliphatic amine or aromatic amine and encompass compounds comprising one or multiple amino groups. The amino group can be primary amines, secondary amines and tertiary amines, wherein one or more hydrogen atoms may or may not be independently substituted with other groups.

In the present invention, "fluorinated" is understood to denote in particular at least one of the hydrogen atoms of the following chemical group has been replaced by fluorine atom. If all of the hydrogen atoms have been replaced by fluorine atoms, the fluorinated chemical group can be also called "perfluorinated." For instance, "fluorinated alkyl group" include (per)fluorinated alkyl group, such as (per)fluorinated methyl, ethyl, propyl, isopropyl, butyl, isobutyl, *sec*-butyl or *tert*-butyl ; and for instance -CF₃, -C₂F₅, heptafluoroisopropyl (-CF(CF₃)₂), hexafluoroisopropyl (-CH(CF₃)₂) or -CF₂(CF₂)₄CF₃. Non-limiting example of "fluorinated aryl group" include -C₆F₅.

In the present invention, "(meth)acrylic recurring unit" is understood to denote in particular any recurring unit derived from (meth)acrylic monomer for a formation of polymeric material. In the present invention, "(meth)acrylic recurring unit" is preferably obtainable, more preferably obtained from (meth)acrylic monomer.

In the present invention, "vinylic recurring unit" is understood to denote in particular any recurring unit derived from vinyl monomer comprising at least one vinyl group for a formation of polymeric material. In the present invention, "vinylic recurring unit" is preferably obtainable, more preferably obtained from vinyl monomer.

The photo-curable copolymer according to the present invention at least comprises a first (meth)acrylic recurring unit (A) comprising at least one fluorine atom, silane group, or siloxane group. The recurring unit (A) is primarily intended to impart excellent anti-fingerprint property to the copolymer, but its intended function is not necessarily limited thereto. In addition, solubility of the copolymer can be easily controlled by using the first (meth)acrylic recurring unit (A). Further, excellent adhesion to underlying substrate can be obtained by using the first (meth)acrylic recurring unit (A). One or more fluorine atoms may be present in one or more substituent attached to a backbone and/or a side chain of the recurring unit (A). Silane group or siloxane group may be linked to a side chain of the photo-curable copolymer. A (meth)acrylic monomer for the first (meth)acrylic recurring unit (A) can be at least one selected from fluoro-(meth)acrylic monomer, (meth)acrylic monomer carrying fluorine or fluorinated groups (e.g., fluorinated alkyl and fluorinated aryl groups), fluoro-(meth)acrylic monomer carrying fluorine or fluorinated groups, and (meth)acrylic monomer carrying at least one silane group or siloxane group. The (meth)acrylic recurring unit (A) preferably comprises at least one fluorine atom. The (meth)acrylic recurring unit (A) more preferably comprises at least one partially fluorinated or perfluorinated alkyl or aryl group in its side chain.

It is particularly preferred that the (meth)acrylic recurring unit (A) comprises a fluorinated alkyl or aryl group in its side chain wherein the number of fluorine atom contained in the fluorinated alkyl or aryl group is equal to or more than the number of carbon atoms contained in the group. Outstanding properties, including excellent anti-fingerprint property, can be obtained in this embodiment.

In the present invention, the (meth)acrylic monomer for the first (meth)acrylic recurring unit (A) is preferably selected from the group consisting of 1,1,1,3,3,3-hexafluoroisopropyl acrylate, 1H,1H,2H,2H-heptadecafluorodecyl acrylate, 1H,1H,2H,2H-heptadecafluorodecyl methacrylate, 1H,1H,3H-hexafluorobutyl acrylate, 1H,1H,3H-hexafluorobutyl methacrylate, 1H,1H,3H-tetrafluoropropyl methacrylate, 1H,1H,5H-octafluoropentyl acrylate, 1H,1H,5H-octafluoropentyl methacrylate, 1H,1H,7H-dodecafluoroheptyl methacrylate, 1H,1H-heptafluorobutyl acrylate, 2,2,2-trifluoroethyl acrylate, 2,2,2-trifluoroethyl methacrylate, bis-(1,1,1,3,3,3-hexafluoroisopropyl) itaconate, bis-(2,2,2-trifluoroethyl) itaconate, hexafluoro-isopropyl methacrylate, pentafluorophenyl acrylate, pentafluorophenyl methacrylate, 2,2,3,3,4,4,5,5,6,6,7,7-dodecafluoroheptyl acrylate, 4,4,5,5,6,6,7,7,8,9,9,9-dodecafluoro-2-hydroxy-8-(trifluoromethyl)nonyl methacrylate, 3,3,4,4,5,5,6,6,7,7,8,8,9,9,10,10,11,12,12,12-eicosafluoro-11-(trifluoromethyl)dodecyl methacrylate, 3,3,4,4,5,5,6,6,7,7,8,8,9,9,10,10,11,11,12,12,12-heneicosafluorododecyl acrylate, 3,3,4,4,5,5,6,6,7,7,8,8,9,9,10,10,11,11,12,12,12-heneicosafluorododecyl methacrylate, 2,2,3,3,4,4,4-heptafluorobutyl methacrylate, 4,4,5,5,6,6,7,7,8,8,9,9,10,11,11,11-hexadecafluoro-2-hydroxy-10-(trifluoromethyl)undecyl methacrylate, 3,3,4,4,5,5,6,6,7,7,8,8,9,10,10,10-hexadecafluoro-9-(trifluoromethyl)decyl acrylate, 3,3,4,4,5,5,6,6,7,7,8,8,9,10,10,10-hexadecafluoro-9-(trifluoromethyl)decyl methacrylate, 4,4,5,5,6,7,7,7-octafluoro-2-hydroxy-6-(trifluoromethyl)heptyl methacrylate, 2,2,3,3,3-pentafluoropropyl acrylate, 2,2,3,3,3-pentafluoropropyl methacrylate, 1H,1H,2H,2H-perfluorodecyl acrylate, 4,4,5,5,6,6,7,7,8,8,9,9,9-tridecafluoro-2-hydroxynonyl acrylate, 3,3,4,4,5,5,6,6,7,7,8,8,8-tridecafluorooctyl acrylate, 3,3,4,4,5,5,6,6,7,7,8,8,8-tridecafluorooctyl methacrylate, 1,1,1-trifluoro-2-(trifluoromethyl)-2-hydroxy-4-methyl-5-pentyl methacrylate, 2-[(1', 1', 1 '-trifluoro-2'-(trifluoromethyl)-2'-hydroxy)propyl]-3-norbornyl methacrylate, 3,3,4,4,5,5,6,6,7,7,8,8,9,9,10,10,10-heptadecafluorodecyl methacrylate, 2,2,3,3,4,4,4-heptafluorobutyl acrylate, 2,2,3,4,4,4-hexafluorobutyl acrylate, 2,2,3,4,4,4-hexafluorobutyl methacrylate, 1,1,1,3,3,3-hexafluoroisopropyl methacrylate, 2,2,3,3,4,4,5,5-octafluoropentyl acrylate, 2,2,3,3,4,4,5,5-octafluoropentyl methacrylate, and 2,2,3,3-tetrafluoropropyl methacrylate, but the present invention is not limited thereto.

In the present invention, the first (meth)acrylic recurring unit (A) preferably complies with formula (I-1) or (I-2) below, preferably with formula (I-1) :

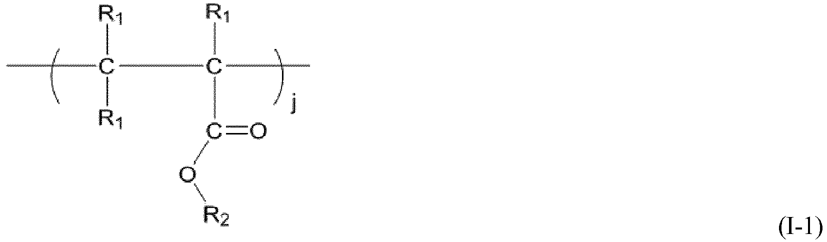

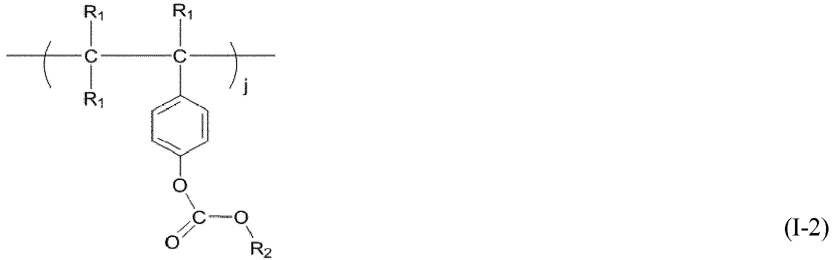

In formulae (I-1) and (I-2), R₁ is independently selected from the group consisting of hydrogen, fluorine, alkyl group, and fluorinated alkyl group, R₂ is at least one group selected from the group consisting of fluorine, fluorinated alkyl group, silane group, and siloxane group, and j denotes mole % of the first (meth)acrylic recurring unit (A) in the photo-curable copolymer. R₁ is preferably selected from -H, -CH₃, -C₂H₅, -F, -CF₃, and -C₂F₅. R₂ is preferably selected from -F, -CF₃, -C₂F₅, -C₃F₇, -C₄F₉, -C₅F₁₁, 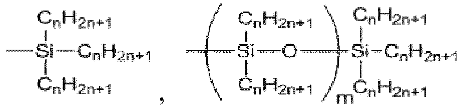 (wherein, each m and n is independently an integer of 1 to 20).

In the present invention, j is preferably at least 20 % by mole and no more than 80 % by mole, more preferably at least 40 % by mole and no more than 60 % by mole. Without wishing to be bound by any theory, it is believed that excellent anti-fingerprint property and curability can be attained in the specified range.

The photo-curable copolymer according to the present invention, in addition to the first (meth)acrylic recurring unit (A), at least comprises a second vinylic recurring unit (B) comprising at least one photo-curable group. The second vinylic recurring unit (B) preferably comprises at least one vinyl group, in particular (meth)acrylate group, in its side chain as the photo-curable group. The recurring unit (B) is primarily intended not only to impart excellent hardness and resistance to abrasion to the copolymer, but also to improve adhesion to the underlying substrate, but its intended function is not necessarily limited thereto. The second vinylic recurring unit (B) preferably consists of (meth)acrylic backbone. In this instance, good stability and/or sufficient transparency can be obtained.

In the present invention, the second vinylic recurring unit (B) comprising at least one photo-curable group may be prepared by two-step process. As a first step, at least one the (meth)acrylic monomer for the first (meth)acrylic recurring unit (A) is polymerized with at least one vinyl monomer comprising at least one first functional group in a side chain to form an intermediate copolymer, the first functional group which may be subsequently reacted with at least one compound which comprises at least one the photo-curable group and at least one second functional group. The first step can be generally conducted by polymerizing the above-explained monomers optionally with other components, usually in presence of solvent by known polymerization means in the art, preferably by using a radical polymerization method. For instance, both monomers are mixed in solvent to prepare a mixed solution, to which at least one polymerization initiator is introduced subsequently, and then, polymerization reaction is conducted under the temperature of about 50 to 140°C, but the present invention is not limited thereto. As a second step, the obtained intermediate copolymer further reacts with at least one the compound which comprises at least one the photo-curable group and at least one second functional group which can react with the first functional group in the initial vinyl monomer to form a linkage. Conventional methods, such as addition of reaction catalyst and/or heating (e.g. up to 150°C), may be used in the second step. Examples of the reaction to for the linkage include, but not limited to, the following reactions:
-. Reaction between isocyanate group and amine group to form a linkage comprising urea group
-. Reaction between isocyanate group and hydroxyl group to form a linkage comprising urethane group
-. Reaction between epoxy group and amine group to form a linkage comprising amine group
-. Reaction between epoxy group and hydroxyl group to form a linkage comprising ether group
-. Reaction between carboxyl group and amine group to form a linkage comprising amide group
-. Reaction between carboxyl group and hydroxyl group to form a linkage comprising ester group
-. Reaction between silane group and hydroxyl group to form a linkage comprising silane group
-. Reaction between silane group and silanol group to form a linkage comprising siloxane group
-. Reaction between epoxy group and carboxyl group to form a linkage comprising ester group
-. Reaction between isocyanate group and carboxyl group to form a linkage comprising amide group

It is particularly preferred to form a linkage comprising urea group or urethane group from the preparation process point of view.

Thus, the first functional group may be selected from the group consisting of isocyanate group, epoxy group, carboxyl group, and silane group, and in this instance, the second functional group may be selected from the group consisting of amine group, hydroxyl group, carboxyl group, and silanol group. Alternatively, the first functional group may be selected from the group consisting of amine group, hydroxyl group, carboxyl group, and silanol group, while the second functional group being selected from the group consisting of isocyanate group, epoxy group, carboxyl group, and silane group. Particular examples of the vinyl monomer comprising at least one first functional group and the compound which comprises at least one photo-curable group and the second functional group include (but the present invention is not limited thereto):
-. isocyanate (meth)acrylate monomers, such as 2-isocyanatoethyl acrylate, 2-isocyanatoethyl methacrylate, 3-isopropenyl-α,α-dimethylbenzyl isocyanate, allyl isocyanate, and vinyl isocyanate
-. (meth)acrylate monomers comprising at least one amine group, such as methacrylamide, 2-aminoethyl methacrylate, N-(3-aminopropyl) methacrylamide, N-ethylacrylamide, N-phenylacrylamide, and 2-(*tert*-butylamino)ethyl methacrylate
-. hydroxyl (meth)acrylate monomers, such as 1,1,1-trimethylolpropane diallyl ether, 1,1,1-trimethylolpropane monoallyl ether, glycerol monomethacrylate, 2-hydroxyethyl acrylate, 2-hydroxypropyl acrylate, 2-hydroxyethyl methacrylate, and 2-hydroxypropyl methacrylate
-. epoxy (meth)acrylate monomers, such as glycidyl methacrylate, glycidyl acrylate, allyl glycidyl ether, 1,2-epoxy-5-hexene, 3,4-epoxy-1-butene, 1,2-epoxy-9-decene, 1,2-epoxy-7-octene, 2-methyl-2-vinyloxirane, and 4-vinyl-1-cyclohexene 1,2-epoxide
-. (meth)acrylate monomers comprising at least one carboxylic acid, such as methacrylic acid, acrylic acid, 2-carboxyethyl acrylate, mono-2-(methacryloyloxy)ethyl maleate, mono-2-(methacryloyloxy)ethyl succinate, and mono-2-(methacryloyloxy)ethyl phthalate
-. (meth)acrylate monomers comprising at least one silane group, such as tris(2-methoxyethoxy)(vinyl)silane, triacetoxy(vinyl)silane, tris(trimethylsiloxy)(vinyl)silane, vinyltrimethoxysilane, triethoxyvinylsilane, and allyltrimethoxysilane.

In the present invention, the second vinylic recurring unit (B) preferably comprises at least one of the following linking groups between the copolymer backbone derived of the second vinylic recurring unit (B) and the photo-curable group: 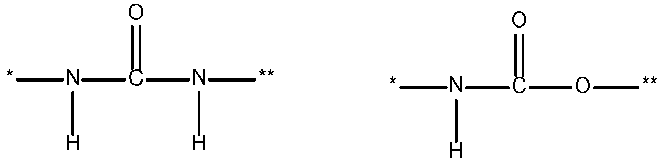 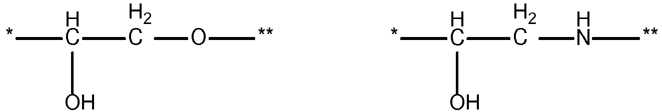 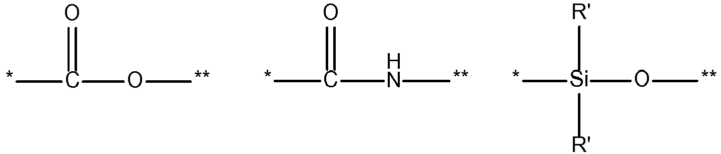 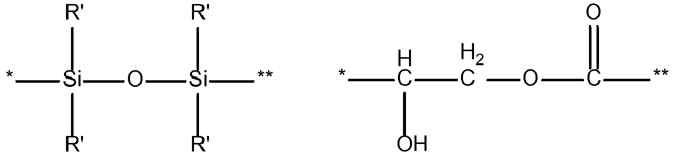 wherein each R' is independently selected from alkyl group.
* : linked either to the backbone side or to the photo-curable group side
* * : linked to other side than *

In the present invention, it is particularly preferred that the second vinylic recurring unit (B) comprises at least one of the following linking groups:

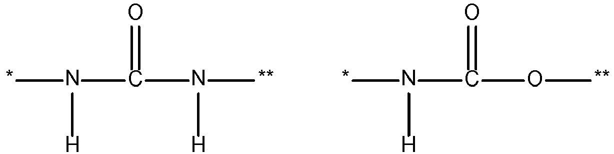

In one embodiment of the present invention, the second vinylic recurring unit (B) complies with the formula (II-1) or (II-2) below :

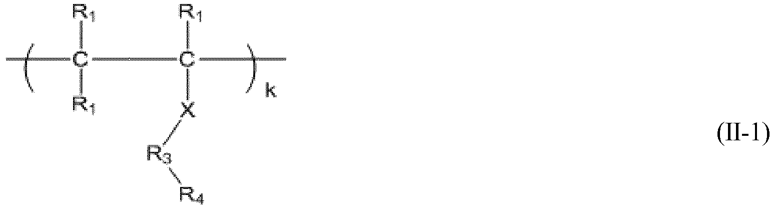

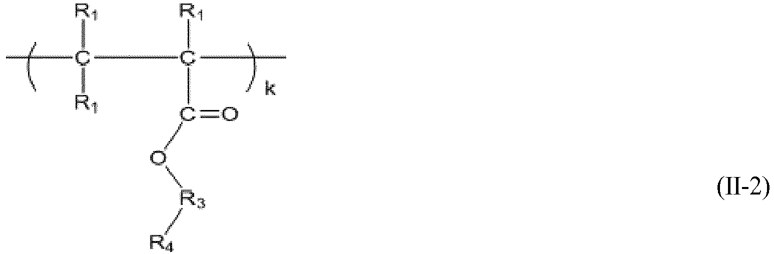

In the formula (II-1) and (II-2), R₁ is independently selected from the group consisting of hydrogen, fluorine, alkyl group, and fluorinated alkyl group, in particular selected from -H, -CH₃, -C₂H₅, -F, -CF₃, and -C₂F₅. X is a hydrocarbon-based linking group, and often, contains an alkyl group or aryl group. X is preferably alkyl- or aryl-based linking group. One or more of heteroatom group, such as O, S, and NH, may be inserted between the CH₂-CH₂ bond. Particular examples of X include -CH₂-, -C₂H₄-, -C₃H₆-, -C₄H₈-, -C₅H₁₀-, -CH₂-O-, -C₂H₄O-, -C₃H₆O-, -C₂H₄NH-, -C₃H₆NH-, -C₆H₄-, and -C₁₀H₆-, but the present invention is not limited thereto. R₃ is a linking group which can be obtained via the reaction of the first functional group and the second functional group as explained in the above. R₃ preferably comprises at least one group selected from the group consisting of urea group, urethane group, ether group, amine group, ester group, amide group, silane group, and siloxane group. In particular, R₃ comprises at least one of the linking group structures as explained in the above. R₄ is the photo-curable group, and preferably vinyl-containing group, in particular (meth)acrylate group. k denotes mole % of the second vinylic recurring unit (B) in the photo-curable copolymer. In the present invention, k is preferably at least 20 % by mole and no more than 80 % by mole, more preferably at least 40 % by mole and no more than 60 % by mole. Without wishing to be bound by any theory, it is believed that excellent anti-fingerprint property and curability can be attained in the specified range.

The photo-curable copolymer according to the present invention may optionally comprise an additional third recurring unit (C). Examples of a monomer for the third recurring unit (C) include (meth)acrylic monomers, such as (meth)acrylate and (meth)acrylate methyl, which does not react with the first functional group of the intermediate copolymer of the invention, but the present invention is not limited thereto.

In the present invention, the photo-curable copolymer preferably has a weight-average molecular weight of from 500 to 50,000 g/mol, more preferably 1,000 to 30,000 g/mol. In the present invention, the weight-average molecular weight (Mw) of the polymeric material is obtained by a gel permeation chromatography (GPC) in tetrahydrofuran (THF), calibrated using a polystyrene standard.

Another aspect of the present invention concerns photo-curable resin compositions comprising
(i) at least one photo-curable copolymer according to the present invention,
(ii) at least one photo initiator,
(iii) at least one solvent, and
(iv) optionally, at least one additive.

In the present invention, for the photo initiator, one or more of hydroxyl ketone type, such as 1-hydroxycyclohexyl phenyl ketone (Irgacure 184), amino ketone type, such as 2-benzyl-2-(dimethylamino)-1-[4-(morpholinyl) phenyl]-1-butanone (Irgacure 369) and α-amino acetophenone (Irgacure 907), benzyl dimethyl ketal type, such as benzyl dimethyl ketal (Irgacure 651), bis-acyl phosphine type, such as phenyl bis(2,4,6-trimethyl benzoyl (Irgacure 819), and mono-acyl phosphine type, such as 2,4,6-trimethyl benzoyl diphenyl phosphine oxide (TPO) can be used.

In the present invention, the amount of the photo initiator can be from 0.1 to 10 parts by weight, preferably 1 to 8 parts by weight, relative to 100 parts by weight of the photo-curable resin in the composition (i.e. sum of the weight of the photo-curable copolymer and multi-functional vinyl if present).

In the present invention, the solvent is not particularly limited as long as it can dissolve the photo-curable copolymer of the present invention. In the present invention, the solvent preferably comprises at least one of alcohols, acetates, ethers, glycols, ketones and carbonates. The solvent comprising methyl ethyl ketone (MEK) is particularly preferred in terms of coatability and thickness uniformity. Mixed solvent of methyl ethyl ketone and at least one solvent selected from the group consisting of propyleneglycol monopropyl ether, propyleneglycol monomethyl ether, ethyleneglycol monoethyl ether, ethyleneglycol monopropyl ether, ethyleneglycol monobutyl ether, diethyleneglycol monomethyl ether, diethylglycol monoethyl ether, diethylglycol monopropyl ether, diethylglycol monobutyl ether, diethyleneglycol-2-ethylhexyl ether, toluene, xylene, acetone, methyl isobutyl ketone, diacetone alcohol (DAA), n-butanol, methanol, ethanol, isopropyl alcohol, and any combination thereof can be preferably used.

In the present invention, the amount of the solvent can be selected so as to make a solid content of the composition being from 10 % to 90 %, in particular 20 % to 70 %. For instance, the amount of the solvent can be from 50 to 1,000 parts by weight, preferably from 200 to 600 parts by weight, relative to 100 parts by weight of the photo-curable resin.

Another particular component which can be used in the photo-curable resin composition according to the present invention is a multi-functional vinyl compound. Thus, in one embodiment of the present invention, the photo-curable resin composition comprises (i) at least one photo-curable copolymer according to the present invention, (ii) at least one photo initiator, (iii) at least one solvent, at least one multi-functional vinyl compound, and (iv) optionally, at least one additive.

The multi-functional vinyl compound comprises at least one vinyl group, in particular at least one (meth)acrylate group. Examples of the multi-functional vinyl compound include, but not limited to, two functional acrylates, such as 1,6-hexandiol diacrylate (HDDA), 1,3-butyleneglycol dimetacrylate (BGDMA), and tripropyleneglycol diacrylate (TPGDA), and three or more functional acrylates, such as trimethylolpropane triacrylate (TMPTA), pentaerythritol triacrylate (PETA) and dipentaerythritol hexaacrylate (DPHA). Another type of the multi-functional vinyl compound suitable in the present invention is vinyl compounds comprising at least one cyclosiloxane or silsesquioxane group. Particular type of the vinyl compounds comprising at least one cyclosiloxane or silsesquioxane group has at least one of the following structures, but the present invention is not limited thereto: 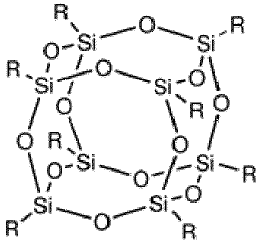 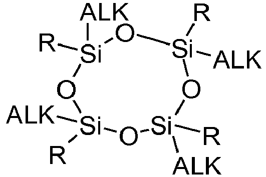 wherein ALK is independently selected from alkyl groups, and 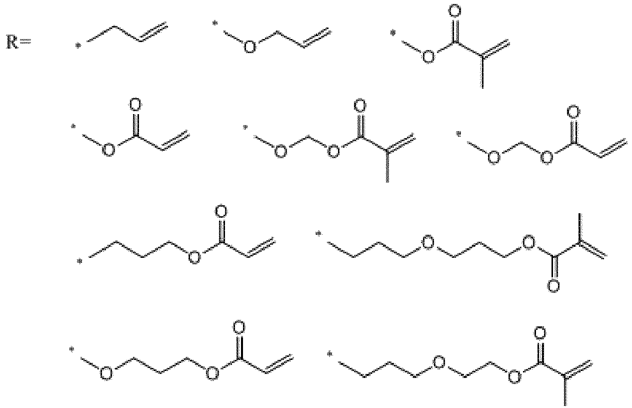 It has been surprisingly found that the vinyl compounds comprising at least one cyclosiloxane or silsesquioxane group can be advantageously used in the composition intended for forming anti-fingerprint hard coating. Thus, the present invention also concerns the use of vinyl compounds comprising at least one cyclosiloxane or silsesquioxane group in forming anti-fingerprint hard coating.

In the present invention, the amount of multi-functional vinyl compound can be from 5 to 80 wt %, preferably from 5 to 70 wt %, more preferably from 10 to 60 wt %, relative to the total weight of the photo-curable resin composition. Satisfactory hardness can be obtained in said ranges.

In the present invention, the amount of the photo-curable copolymer according to the present invention in the composition can be from 1 to 100 parts by weight, preferably from 5 to 50 parts by weight, relative to 100 parts by weight of the multi-functional vinyl compound.

The photo-curable resin composition according to the present invention may further comprise one or more additives used in the art for the purpose of improving desired properties.

Examples of such additive include photosensitizer, surfactant, inorganic nanoparticles, photo-curing accelerator, adhesion promotor, leveling agent, antiforming agent, and crosslinking agent.

In particular, at least one photosensitizer can be used in the photo-curable resin composition according to the present invention. The photosensitizer may activate the photo initiator to further accelerate the curing process. It is preferred to select the photosensitizer which exhibits its functionality under the irradiation of the light source to be used in the curing process. Particular examples of the photosensitizer include benzoin derivatives, benzyl ketal derivatives, acetophenone derivatives, phenone derivatives, and phosphine oxide derivatives, but the present invention is not limited thereto. Benzophenone derivatives are particularly preferred in the present invention.
multi-functional vinylmulti-functional vinylOne or more surfactant can be also advantageously used in the photo-curable resin composition in the present invention. The surfactant can improve coatability, and makes attain uniform thickness, by enhancing wetting performance between the photo-curable resin composition and an underlying layer. In the present invention, the surfactant can be fluorine type, silicon type, and acryl type as known in the art, and is preferably at least one selected from the group consisting of polyoxyethylene lauryl ether, polyoxyethylene stearyl ether, polyoxyethylene oleyl ether, polyoxyethylene octyl phenol ether, polyoxyethylene nonyl phenol ether, and polyethyleneglycol dilaurate. The amount of the surfactant can be 0.01 to 5 wt %, preferably from 0.1 to 2 wt %, relative to the total weight of the photo-curable resin composition.

Another class of additive which can be useful in the photo-curable resin composition according to the present invention is inorganic nanoparticles. The inorganic nanoparticles are believed to help increasing surface hardness of the film. Examples of the inorganic nanoparticle include TiO₂, ZrO₂, Al₂O₃, SnO₂, indium-tin-oxide (ITO), Sb₂O₅, Nb₂O₃, Y₂O₃, SiO₂, CaCO₃ and any combinations thereof, but the present invention is not limited thereto. Average particle size of the inorganic nanoparticle is preferably no more than 50 nm. In the present invention, the amount of the inorganic nanoparticles can be from 3 to 50 wt %, preferably from 5 to 40 wt %, relative to the total weight of the photo-curable resin composition. Excellent surface hardness and scratch resistance as well as satisfactory transparency can be obtained in said ranges.

The photo-curable resin composition according to the present invention can be suitably used as the material for forming a layer, in particular an anti-fingerprint hard coating layer, in various applications, including electronics applications, such as display devices, especially LCD or OLED device. Accordingly, a further aspect of the present invention concerns layers obtainable by curing the photo-curable resin composition according to the present invention. The layer of the present invention is preferably obtained by curing the photo-curable resin composition according to the present invention.

In a particular embodiment of the present invention, the layer according to the present invention is suitably used in an anti-fingerprint film.

A method for forming the layer of the present invention comprises applying the photo-curable resin composition of the present invention on an underlying substrate. Such application can be brought about for example using wetting, such as dipping, printing, such as gravure printing and inkjet printing, coating, such as spin coating, bar coating, slit coating, spray coating, roll coating, and spreading, or deposition. After applying the photo-curable resin composition on the underlying substrate, the layer according to the present invention can be formed for example by applying heat to remove the solvent. Typical temperatures for the heat application are from 70 to 150°C, preferably 80 to 110°C. Typical heat application time is from 1 to 30 min, preferably 2 to 10 min. Then, the cured coating layer may be obtained by irradiating light, such as UV light, with appropriate light intensity. Thickness of the cured coating layer may be selected from the range of 1 to 50 micron, in particular 5 to 20 micron. Examples of the light source include mercury lamp and metal halide lamp, but the present invention is not limited thereto.

The layer according to the present invention can exhibit excellent hardness, flexibility, and anti-fingerprint property. In addition, the layer according to the present invention does not substantially suffer from the issues of film curl and rainbow phenomena. Further, outstanding adhesion to underlying substrate, excellent resistance to abrasion, and/or reliability (e.g. reliability against temperature and humidity conditions) can be obtained by the layer according to the present invention.

In the present invention, hardness is assessed by pencil hardness test. Wood was stripped from pencil of varying hardness, leaving the full diameter of lead exposed to a length of 1/4 inch to 3/8 inch. The end of the lead was flattened at 90 degrees to the pencils axis, and holding the pencil at 45 degrees to the film surface, the pencil is pushed forward using 1 kg downward pressure as can be applied without breaking the lead. The result is reported as the highest pencil hardness that produced no rupture of the film.

In the present invention, flexibility is assessed by the existence of crack after completely rolling the coated film on the surface of cylinder having a certain diameter, such as a diameter of 20 mm (20R) and a diameter of 10 mm(10R).

In the present invention, anti-fingerprint property is primarily assessed by measuring water contact angle. Minimum amount of water is dropped on the coating using syringe, and a picture is taken to measure the contact angle between water droplet and the surface.

The layer according to the present invention can attain at least one of the following properties, preferably all of them:
-. at least 100 degrees, preferably 105 degrees, of water contact angle
-. at least 5H, preferably 6H, of pencil hardness
-. no crack on the flexibility test (20R), preferably on the flexibility test (10R)

The following examples illustrate the invention in further detail without however limiting it.

### Examples

### Example 1 : Reparation of photo-eurable copolymer 1

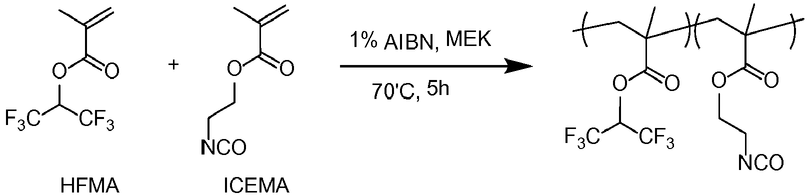

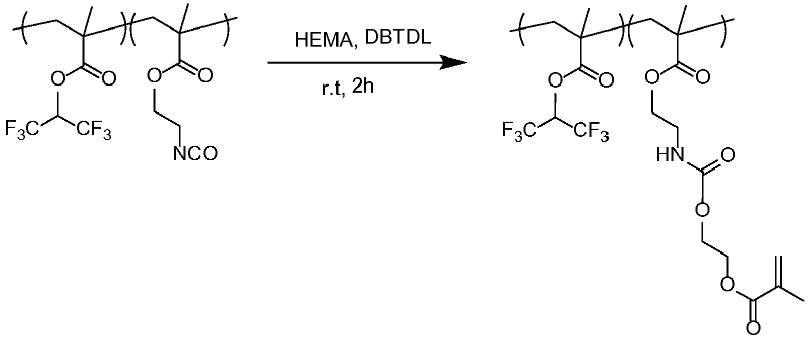

70 g of acrylic monomer 1,1,1,3,3,3-hexafluoroisopropyl methacrylate (HFMA) and 46 g of acrylic monomer 2-isocyanatoethyl methacrylate (ICEMA) (mole ratio being 50:50) were dissolved in 170 g of MEK (solid content: 40%) in 1L flask, and the temperature was raised to 70°C while stirring and introducing nitrogen gas. When the temperature reached 70°C, 1.16 g of azobisisobutyro nitrile (AIBN) was added as thermal radical initiator, and then, stirred for 5 hours. The temperature was cooled to room temperature, and then, 52 g of 2-hydroxy ethyl methacrylate (HEMA) and 4 g of dibutyltin dilaurate (DBTDL) were further introduced and stirred for 2 hours. Upon completion of the reaction, the temperature was cooled to room temperature, and precipitated with methanol. The photo-curable copolymer 1 was obtained as powder after drying the precipitates for one day in vacuum oven of 50°C.

### Example 2 : Reparation of photo-eurable resin composition 1

100 g of the photo-curable copolymer prepared in Example 1, 120 g of trimethylolpropane triacrylate as multifunctional monomer, 30 g of Irgacure 184 as photo initiator, 5 g of polyethyleneglycol dilaurate as surfactant, and 200 g of methyl ethyl ketone (MEK) as solvent were mixed under stirring for one day and filtered with Teflon filter of 0.1 µm to obtain the photo-curable resin composition 1.

### Comparative example 1 : Reparation of photo-curable resin composition 2

220 g of trimethylolpropane triacrylate as multifunctional monomer, 30 g of Irgacure 184 as photo initiator, 5 g of polyethyleneglycol dilaurate as surfactant, 200 g of MEK as solvent were mixed under stirring for one day and filtered with Teflon filter of 0.1 µm to obtain the photo-curable resin composition 2. Cracks were found in the coating produced from this composition when the coated film was rolled completed on the surface of cylinder having a diameter of 20 mm.

## Claims

1. A photo-curable copolymer comprising a first (meth)acrylic recurring unit (A) comprising at least one fluorine atom, silane group, or siloxane group, and a second vinylic recurring unit (B) comprising at least one photo-curable group.

2. The photo-curable copolymer according to claim 1, wherein the photo-curable group of the second vinylic recurring unit (B) comprises at least one vinyl group, in particular (meth)acrylate group.

3. The photo-curable copolymer according to claim 1 or 2, wherein the second vinylic recurring unit (B) comprises at least one of the following linking groups between the copolymer backbone derived of the second vinylic recurring unit (B) and the photo-curable group: 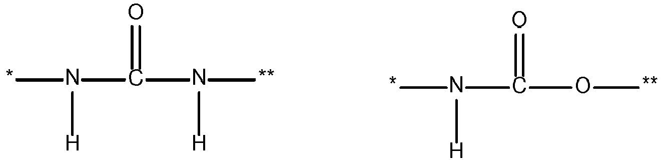 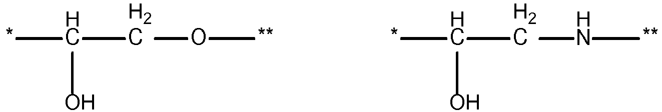 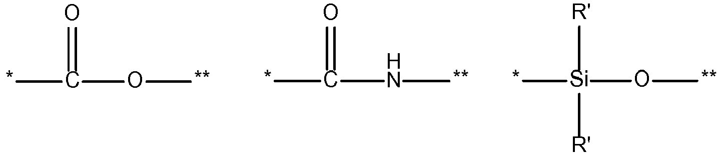 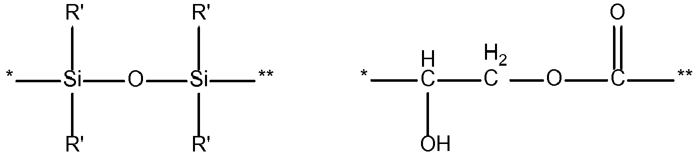 wherein each R' is independently selected from alkyl group.
* : linked either to the backbone side or to the photo-curable group side
** : linked to other side than *

4. The photo-curable copolymer according to any one of claims 1 to 3, wherein a (meth)acrylic monomer for the first (meth)acrylic recurring unit (A) comprises at least one fluorine atom, preferably is selected from the group consisting of 1,1,1,3,3,3-hexafluoroisopropyl acrylate, 1H,1H,2H,2H-heptadecafluorodecyl acrylate, 1H,1H,2H,2H-heptadecafluorodecyl methacrylate, 1H,1H,3H-hexafluorobutyl acrylate, 1H,1H,3H-hexafluorobutyl methacrylate, 1H,1H,3H-tetrafluoropropyl methacrylate, 1H,1H,5H-octafluoropentyl acrylate, 1H, 1H,5H-octafluoropentyl methacrylate, 1H,1H,7H-dodecafluoroheptyl methacrylate, 1H,1H-heptafluorobutyl acrylate, 2,2,2-trifluoroethyl acrylate, 2,2,2-trifluoroethyl methacrylate, bis-(1,1,1,3,3,3-hexafluoroisopropyl) itaconate, bis-(2,2,2-trifluoroethyl) itaconate, hexafluoro-isopropyl methacrylate, pentafluorophenyl acrylate, pentafluorophenyl methacrylate, 2,2,3,3,4,4,5,5,6,6,7,7-dodecafluoroheptyl acrylate, 4,4,5,5,6,6,7,7,8,9,9,9-dodecafluoro-2-hydroxy-8-(trifluoromethyl)nonyl methacrylate, 3,3,4,4,5,5,6,6,7,7,8,8,9,9,10,10,11,12,12,12-eicosafluoro-11-(trifluoromethyl)dodecyl methacrylate, 3,3,4,4,5,5,6,6,7,7,8,8,9,9,10,10,11,11,12,12,12-heneicosafluorododecyl acrylate, 3,3,4,4,5,5,6,6,7,7,8,8,9,9,10,10,11,11,12,12,12-heneicosafluorododecyl methacrylate, 2,2,3,3,4,4,4-heptafluorobutyl methacrylate, 4,4,5,5,6,6,7,7,8,8,9,9,10,11,11,11-hexadecafluoro-2-hydroxy-10-(trifluoromethyl)undecyl methacrylate, 3,3,4,4,5,5,6,6,7,7,8,8,9,10,10,10-hexadecafluoro-9-(trifluoromethyl)decyl acrylate, 3,3,4,4,5,5,6,6,7,7,8,8,9,10,10,10-hexadecafluoro-9-(trifluoromethyl)decyl methacrylate, 4,4,5,5,6,7,7,7-octafluoro-2-hydroxy-6-(trifluoromethyl)heptyl methacrylate, 2,2,3,3,3-pentafluoropropyl acrylate, 2,2,3,3,3-pentafluoropropyl methacrylate, 1H,1H,2H,2H-perfluorodecyl acrylate, 4,4,5,5,6,6,7,7,8,8,9,9,9-tridecafluoro-2-hydroxynonyl acrylate, 3,3,4,4,5,5,6,6,7,7,8,8,8-tridecafluorooctyl acrylate, 3,3,4,4,5,5,6,6,7,7,8,8,8-tridecafluorooctyl methacrylate, 1,1,1-trifluoro-2-(trifluoromethyl)-2-hydroxy-4-methyl-5-pentyl methacrylate, 2-[(1',1',1'-trifluoro-2'-(trifluoromethyl)-2'-hydroxy)propyl]-3-norbornyl methacrylate, 3,3,4,4,5,5,6,6,7,7,8,8,9,9,10,10,10-heptadecafluorodecyl methacrylate, 2,2,3,3,4,4,4-heptafluorobutyl acrylate, 2,2,3,4,4,4-hexafluorobutyl acrylate, 2,2,3,4,4,4-hexafluorobutyl methacrylate, 1,1,1,3,3,3-hexafluoroisopropyl methacrylate, 2,2,3,3,4,4,5,5-octafluoropentyl acrylate, 2,2,3,3,4,4,5,5-octafluoropentyl methacrylate, and 2,2,3,3-tetrafluoropropyl methacrylate.

5. The photo-curable copolymer according to any one of claims 1 to 4, wherein the first (meth)acrylic recurring unit (A) complies with formula (I-1) or (I-2) below : 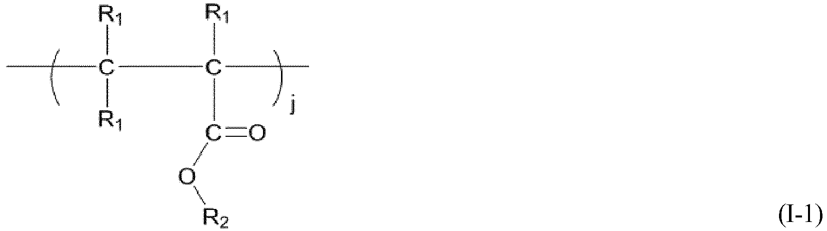 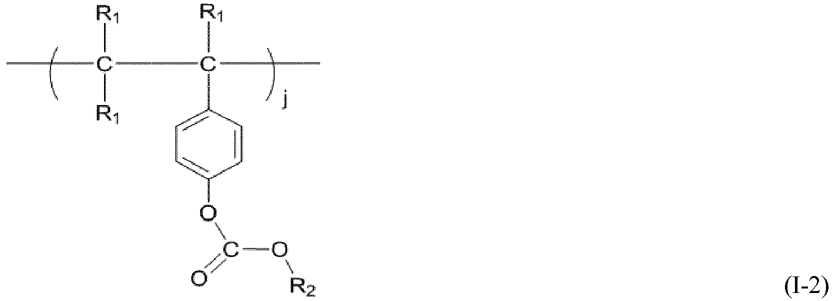 wherein R₁ is independently selected from the group consisting of hydrogen, fluorine, alkyl group, and fluorinated alkyl group, R₂ is at least one group selected from the group consisting of fluorine, fluorinated alkyl group, silane group, and siloxane group, and j denotes mole % of the first (meth)acrylic recurring unit (A) in the photo-curable copolymer and is at least 20 % by mole and no more than 80 % by mole.

6. The photo-curable copolymer according to any one of claims 1 to 5, wherein the second vinylic recurring unit (B) complies with the formula (II-1) or (II-2) below : 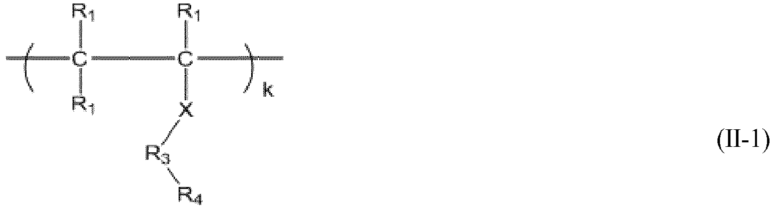 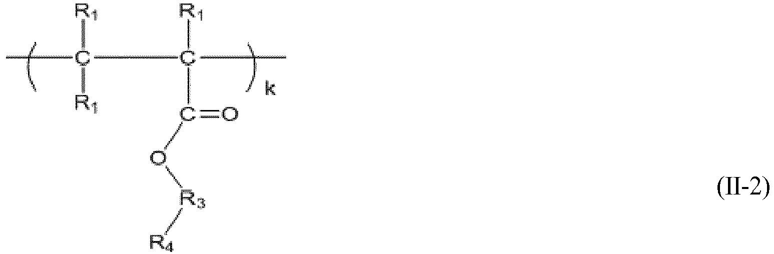 wherein R₁ is independently selected from the group consisting of hydrogen, fluorine, alkyl group, and fluorinated alkyl group, in particular selected from -H, -CH₃, -C₂H₅, -F, -CF₃, and -C₂F₅, X is an alkyl- or aryl-based linking group, R₃ is a linking group and comprises at least one group selected from the group consisting of urea group, urethane group, ether group, amine group, ester group, amide group, silane group, and siloxane group, R₄ is the photo-curable group, in particular vinyl-containing group, and k denotes mole % of the second vinylic recurring unit (B) in the photo-curable copolymer and is at least 20 % by mole and no more than 80 % by mole.

7. The photo-curable copolymer according to any one of claims 1 to 6, wherein a weight-average molecular weight of the photo-curable copolymer is from 500 to 50,000 g/mol, in particular 1,000 to 30,000 g/mol, wherein the weight-average molecular weight (Mw) of the polymeric material is obtained by a gel permeation chromatography (GPC) in tetrahydrofuran (THF), calibrated using a polystyrene standard.

8. A photo-curable resin composition comprising :
(i) at least one photo-curable copolymer according to any one of claims 1 to 7,
(ii) at least one photo initiator,
(iii) at least one solvent, and
(iv) optionally, at least one additive.

9. The photo-curable resin composition according to claim 8, further comprising at least one multi-functional vinyl compound.

10. The photo-curable resin composition according to claim 8 or 9, wherein the photo initiator is selected from the group consisting of hydroxyl ketone type initiator, such as 1-hydroxycyclohexyl phenyl ketone (Irgacure 184), amino ketone type initiator, such as 2-benzyl-2-(dimethylamino)-1-[4-(morpholinyl) phenyl]-1-butanone (Irgacure 369) and α-amino acetophenone (Irgacure 907), benzyl dimethyl ketal type initiator, such as benzyl dimethyl ketal (Irgacure 651), bis-acyl phosphine type initiator, such as phenyl bis(2,4,6-trimethyl benzoyl (Irgacure 819), mono-acyl phosphine type initiator, such as 2,4,6-trimethyl benzoyl diphenyl phosphine oxide (TPO), and any combination thereof.

11. The photo-curable resin composition according to any one of claims 8 to 10, wherein the solvent comprises methyl ethyl ketone.

12. The photo-curable resin composition according to any one of claims 8 to 11, wherein the additive is selected from the group consisting of photosensitizer, surfactant, inorganic nanoparticles, photo-curing accelerator, adhesion promotor, leveling agent, antiforming agent, and crosslinking agent.

13. A layer obtained by curing the photo-curable resin composition according to any one of claims 8 to 12.

14. An anti-fingerprint film, at least comprising the layer according to claim 13.

15. Use of vinyl compounds comprising at least one cyclosiloxane or silsesquioxane group in forming anti-fingerprint hard coating.
